(19)

Europäisches
Patentamt

European
Patent Office

Office européen
des brevets

(11) **EP 3 544 169 A1**

(12) **EUROPEAN PATENT APPLICATION**

(43) Date of publication:
**25.09.2019 Bulletin 2019/39**

(51) Int Cl.:
**H02M 7/49** *(2007.01)*      **H02M 1/32** *(2007.01)*
**H02M 7/5387** *(2007.01)*      **H02M 1/00** *(2006.01)*

(21) Application number: **18382182.6**

(22) Date of filing: **19.03.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Power Electronics España, S.L.**
**46980 Paterna / Valencia (ES)**

(72) Inventors:
• **POVEDA LERMA, Antonio**
**46980 PATERNA (Valencia) (ES)**
• **SALVO LILLO, David**
**46980 PATERNA (Valencia) (ES)**
• **SALVO LILLO, Abelardo**
**46980 PATERNA (Valencia) (ES)**

• **PINEDA SÁNCHEZ, Manuel**
**46980 PATERNA (Valencia) (ES)**
• **RIERA GUASP, Martín**
**46980 PATERNA (Valencia) (ES)**
• **SAPENA BAÑÓ, Angel**
**46980 PATERNA (Valencia) (ES)**
• **PUCHE PANADERO, Rubén**
**46980 PATERNA (Valencia) (ES)**
• **MARTÍNEZ ROMAN, Javier**
**46980 PATERNA (Valencia) (ES)**
• **PÉREZ CRUZ, Juan**
**46980 PATERNA (Valencia) (ES)**
• **MOLLÁ CALABUIG, Sergio**
**46980 PATERNA (Valencia) (ES)**

(74) Representative: **Ungria López, Javier**
**Avda. Ramón y Cajal, 78**
**28043 Madrid (ES)**

(54) **RE-BALANCING PHASE-TO-PHASE VOLTAGES IN CASE OF UNSYMMETRIC PHASE-TO-NEUTRAL VOLTAGES IN A MODULAR MULTILEVEL CONVERTER**

(57)     The present invention relates to a method of electric balancing by vector synthesis applicable to three-phase generating systems. The method comprises obtaining the phase-to-neutral voltages (31), calculating the inverse voltage of the phase-to-neutral voltages (32), fixing the starting inverse sequence level (33) to zero and allowing the free angular displacement of the phase-to-neutral voltages available until the system of phase-to-phase voltages is balanced (34).

$$U_R,\ U_S,\ U_T \quad \text{—} 31$$

$$U_I = 0 \ \Rightarrow\ U_R + U_S a^2 + U_T a = 0 \quad \text{—} 32$$

$$U_R{''} = |U_R|\, e^{j\alpha}\ ;\ U_S{''} = |U_S|\, e^{j\beta}\ ;\ U_T{''} = |U_T|\, e^{j\gamma} \quad \text{—} 33$$

**FIG. 9**

**EP 3 544 169 A1**

**Description**

FIELD OF THE INVENTION

The present invention relates to a method of electric balancing by vector synthesis applicable to power conversion polyphase electric systems and in particular to three-phase generating systems.

The technical field of the invention belongs to the field of power converters, electric generators, transformers, motors and any other type of power system where there is a polyphase voltage/current. More specifically, the field of three-phase power control.

BACKGROUND OF THE INVENTION

An n-phase (or polyphase) power converter based on Multilevel Cascaded H-Bridge (MCHB) topology can be represented as a combination of an n single-phase sinusoidal voltage generators in series. That is to say, a three-phase power converter equates to three single-phase power generators, where each power generator is composed of various power generating cells connected in series. In this manner and under ideal conditions, three voltages of the same magnitude and with a phase shift between them of 120° are obtained at the output of the converter.

In the above situation, it may arise that a cell goes into failure mode and therefore the cell stops generating power. This means that the single-phase generator containing this cell stops producing power, thus causing a fault in the converter, as a result of which the device stops or continues functioning in an unbalanced manner.

In the prior art, the above-mentioned problem, that is to say, when the cell fails, is solved by short-circuiting the power cell. In other words, a bypass of the failed cell is done. This operation is carried out in the control system of the power converter.

The solution of the prior art allows the power converter to continue generating power in the event that at least any one of its cells fails, but introduces a voltage imbalance into the output of the converter, which may be solved by switching off the cells that are required to re-balance the voltage.

In order to solve the imbalance problem above reducing the disconnection of cells exclusively to the failed cell, the patent application with publication number US-A1-5,986,909 and title "Multiphase power supply with plural series connected cells and failed cell bypass" discloses a static solution based on the detection of the failure of the affected cells, in the event of failure of one of these, short-circuiting the cell and reducing the power of the device in proportion to the number of failed cells. The balancing of the phases is carried out by means of the technique of discrete phase displacement, basing said displacement on a previous calculation which is external to the control system.

The solution provided by the previous document has various drawbacks. The main drawback is that the balancing is carried out statically, that is to say, as a function of a pre-configured tables which in no case whatsoever can include all the cases of failure for all the possible powers which the cells can generate.

Another drawback results from the fact that once a cell is overridden, the number of PWM voltage levels available is reduced, therefore the output voltage ripple is greater in the phase affected by the failure. This is translated into a greater imbalance than there would have been if the voltages generated in the cells were perfectly sinusoidal in place of being PWM.

Another drawback results from the fact that the multi-output transformers and in particular the multi-pulse transformers, owing to their inherent physical construction, do not have an equal impedance in each one of their outputs, therefore, depending on the charge and including at full charge, the voltages available in each cell are different and cannot generate a perfectly balanced voltage in the phases of the converter.

Therefore, it would be desirable to obtain a method of balancing the polyphase systems which overcomes the problems of the mentioned technique and the balancing is dynamic, continuous in time and independent of the type of imbalance (external or internal).

DESCRIPTION OF THE INVENTION

In one aspect of the invention, a method of electric balancing by vector synthesis in a three-phase generating system is disclosed. The method of electric balancing by vector synthesis in a three-phase generating system comprises:

i) obtaining the module and phase of each phase-to-neutral output voltage (R, S, T) of the three-phase system forming a system of phase-to-neutral voltages ($U_R$, $U_S$, $U_T$);

ii) calculating a new phase for each phase-to-neutral voltage, keeping constant the module of each phase-to-neutral voltage, such that the following condition is met:

$$U_R + U_S a^2 + U_T a = 0$$

being

$$a = e^{j\frac{2\pi}{3}} \quad ;$$

iii) calculating the new phase-to-neutral voltages ($U_R$", $U_S$", $U_T$") which balance the three-phase generating system from the modules of each phase-to-neutral voltage obtained ($|U_R|$, $|U_S|$, $|U_T|$) in step i) and from the phases calculated in step ii).

In one embodiment, the steps ii) and iii) also comprise:

a) maintaining a phase-to-neutral voltage ($U_R$) in its original position (the module and the phase of $U_R$ are maintained);
b) carrying out the following conversion (since the modules of the phase-to-neutral voltages are known) for the other two phase-to-neutral voltages ($U_S$, $U_T$):

$$0 = U_R + U'_S + U'_T$$

being:

$$|U'_S| = |U_S| \quad \text{and} \quad U'_S = U_S a^2$$

$$|U'_T| = |U_T| \quad \text{and} \quad U'_T = U_T a$$

c) applying the law of cosines to calculate the angles "α", "β", "γ" which denote the angles forming the voltages $U'_S$ and $U'_T$, $U'_T$ and $U_R$ and $U_R$ and $U'_S$, respectively:

$$\alpha = acos\left[\frac{|U'_S|^2 + |U'_T|^2 - |U_R|^2}{2|U'_S||U'_T|}\right]$$

$$\beta = acos\left[\frac{|U_R|^2 + |U'_T|^2 - |U'_S|^2}{2|U_R||U'_T|}\right]$$

$$\gamma = acos\left[\frac{|U_R|^2 + |U'_S|^2 - |U'_T|^2}{2|U_R||U'_S|}\right]$$

expressed as a function of the phase-to-neutral voltages:

$$\alpha = acos\left[\frac{|U_S|^2 + |U_T|^2 - |U_R|^2}{2|U_S||U_T|}\right]$$

$$\beta = acos\left[\frac{|U_R|^2 + |U_T|^2 - |U_S|^2}{2|U_R||U_T|}\right]$$

$$\gamma = acos\left[\frac{|U_R|^2 + |U_S|^2 - |U_T|^2}{2|U_R||U_S|}\right]$$

d) calculating the phase -$\gamma'$- of the voltage $U'_S$ and the phase -$\alpha'$- of the voltage $U'_T$ from the known phase -$\delta$- of $U_R$ and the angles $\alpha, \beta, \gamma$ previously calculated:

$$\gamma' = \delta + \pi - \gamma$$

$$\alpha' = \gamma' + \pi - \alpha$$

$$U'_S = |U_S| e^{j\gamma'}$$

$$U'_T = |U_T| e^{j\alpha'}$$

e) undoing the change:

$$U_S a^2 = U'_S$$

$$U_T a = U'_T$$

remembering that:

$$a = e^{j\frac{2\pi}{3}}$$

$$a^2 = e^{j\frac{4\pi}{3}} = e^{-j\frac{2\pi}{3}}$$

$$\frac{1}{a^2} = e^{j\frac{2\pi}{3}} = a$$

$$\frac{1}{a} = e^{-j\frac{2\pi}{3}} = e^{j\frac{4\pi}{3}} = a^2$$

gives:

$$U_S = U'_S a = |U_S| e^{j(\gamma' + \frac{2\pi}{3})}$$

$$U_T = U'_T a^2 = |U_T| e^{j(\alpha' - \frac{2\pi}{3})}$$

on the one hand:

$$\gamma' + \frac{2\pi}{3} = \delta + \pi + \frac{2\pi}{3} - \gamma = \delta - \gamma + \frac{5\pi}{3}$$

on the other:

$$\alpha' - \frac{2\pi}{3} = \gamma' + \pi - \alpha - \frac{2\pi}{3}$$

$$\alpha' - \frac{2\pi}{3} = \delta + \pi - \gamma + \pi - \alpha - \frac{2\pi}{3}$$

$$\alpha' - \frac{2\pi}{3} = \delta - (\alpha + \gamma) - \frac{4\pi}{3}$$

f) calculating a first solution for the phase-to-neutral voltages:

$$U_R{}'' = |U_R|e^{j\delta}$$

$$U_S{}'' = |U_S|e^{j\left(\delta - \gamma + \frac{5\pi}{3}\right)}$$

$$U_T{}'' = |U_T|e^{j\left(\delta - (\alpha + \gamma) + \frac{4\pi}{3}\right)}.$$

In one embodiment, the method also comprises calculating a second solution for the phase-to-neutral voltages which is calculated as the image of U'$_S$ and U'$_T$, taking the vector U$_R$ as the axis of symmetry:

$$U_R{}'' = |U_R|e^{j\delta}$$

$$U_S{}'' = |U_S|e^{j\left(\frac{\pi}{3} + \gamma + \delta\right)}$$

$$U_T{}'' = |U_T|e^{j\left(\delta + \alpha + \gamma + \frac{4\pi}{3}\right)}$$

In one embodiment, the method also comprises calculating the angular displacement between the phases of phase-to-neutral voltages $U_S''$ and $U_T''$ obtained in step i) and the phases of the phase-to-neutral voltages $U_S''$ and $U_T''$ calculated in the first solution and in the second solution; and choosing the solution with less angular displacement from the first solution and the second solution.

In one embodiment, the method also comprises repeating all the sub steps modifying the sub-step a) for each phase-to-neutral voltage ($U_S''$, $U_T''$), giving six solutions which balance the electric system.

In one embodiment, the steps ii) and iii) also comprise:

a) choosing the two low value phase-to-neutral voltages $(U_S, U_T)$ of the three phase-to-neutral voltages available $(U_R, U_S, U_T)$; placing the two low value phase-to-neutral voltages on the imaginary axis of the complex plane such that greater $(U_S)$ of the two phase-to-neutral voltages is positive and the lower $(U_T)$ of the two phase-to-neutral voltages is negative; and placing the third phase-to-neutral voltage $(U_R)$ on the real axis;

b) calculating the center point of the sum of the two phase-to-neutral voltages placed over the imaginary axis; placing the origin of the real axis on the calculated center point and plotting an equilateral triangle taking as the side, the sum of the two phase-to-neutral voltages placed over the imaginary axis;

c) if the turn of the third phase-to-neutral voltage $(U_R)$ over the height of the equilateral triangle is greater than or equal to the height of the equilateral triangle, turn the third phase-to-neutral voltage $(U_R)$ until it intersects with the vertex of the equilateral triangle, producing a new third phase-to-neutral voltage $(U'_R)$ whose module $\left(|U'_R|\right)$ and

angle "α" with the real axis are calculated in the following manner:

$$\alpha = atan \left[ \frac{|U_S| - |U_T|}{|U_S| + |U_T|} \frac{1}{\sqrt{3}} \right]$$

$$|U_r'| = \frac{(|U_S| + |U_T|)}{cos\alpha} \frac{\sqrt{3}}{2}$$

thus giving the phase-to-neutral balanced voltages which are the two low value phase-to-neutral voltages ($U_S$, $U_T$) and the new third phase-to-neutral voltage ($U'_R$);

d) if the turn of the third phase-to-neutral voltage ($U_R$) over the height of the equilateral triangle is less than the height of the equilateral triangle: turn the third phase-to-neutral voltage ($U_R$) until it intersects with the real axis: point of intersection; plot both lines parallel to the sides of the equilateral triangle through the point of intersection; turn the two low value phase-to-neutral voltages ($U_S$, $U_T$) until they intersect the parallel lines; thus determining the new balanced phase-to-neutral voltages:

$$U_R'' = |U_R|e^{j\alpha}$$

$$U_S'' = |U_S|e^{j\beta}$$

$$U_T'' = |U_T|e^{j\gamma}$$

which are calculated:

$$n = \frac{|U_S| - |U_T|}{2}$$

$$\alpha = asin\left(\frac{n}{|U_R|}\right) = asin\left(\frac{|U_S| - |U_T|}{2|U_R|}\right)$$

$$m = |U_R|cos\alpha$$

$$|U_S|sin\beta = A\frac{\sqrt{3}}{2} - m$$

$$|U_S|cos\beta = \frac{A}{2} + n$$

$$sin^2\beta + cos^2\beta = 1$$

becoming:

$$A^2 + A\left(n - m\sqrt{3}\right) + (m^2 + n^2 - |U_s|^2) = 0$$

solving:

$$A_0 = \frac{m\sqrt{3} - n + \sqrt{\left(n - m\sqrt{3}\right)^2 - 4(m^2 + n^2 - |U_S|^2)}}{2}$$

$$A_1 = \frac{m\sqrt{3} - n - \sqrt{\left(n - m\sqrt{3}\right)^2 - 4(m^2 + n^2 - |U_S|^2)}}{2}$$

the greater of the two solutions is taken: $A = max(A_0, A_1)$ and the remainder of the variables is calculated:

$$\beta = \frac{\pi}{2} + \text{acos}\left(\frac{\frac{A}{2} + n}{|U_S|}\right)$$

$$\gamma = 2\pi - \alpha - \beta$$

In a second aspect of the invention, a method of converting phase-to-phase voltages ($U_{RS}$, $U_{ST}$, $U_{TR}$) to phase-to-neutral voltages ($U_R$, $U_S$, $U_T$) is disclosed. In general, the phase-to-phase voltages are at the output of the three-phase systems which can be measured directly. This second aspect of the invention complements the first aspect of the invention, but could also be used independently. Therefore, the method of converting phase-to-phase voltages ($U_{RS}$, $U_{ST}$, $U_{TR}$) to phase-to-neutral voltages ($U_R$, $U_S$, $U_T$) comprises:

- calculating the system of phase-to-phase voltages ($U_{CD}$, $U_{CI}$, $U_{CH}$) formed by the direct sequence phase-to-phase voltage ($U_{CD}$), the inverse sequence phase-to-phase voltage ($U_{CI}$) and the homopolar sequence phase-to-phase voltage ($U_{CH}$), associated with the phase-to-phase voltages ($U_{RS}$, $U_{ST}$, $U_{TR}$):

$$\begin{bmatrix} U_{CD} \\ U_{CI} \\ U_{CH} \end{bmatrix} = \frac{1}{3} \begin{bmatrix} 1 & a & a^2 \\ 1 & a^2 & a \\ 1 & 1 & 1 \end{bmatrix} \begin{bmatrix} U_{RS} \\ U_{ST} \\ U_{TR} \end{bmatrix}$$

being

$$a = e^{j\frac{2\pi}{3}}$$

- calculating the angle "$\alpha$" of the direct sequence and subtracting it $\pi/6$:

$$\alpha = angle(U_{CD}) - \frac{\pi}{6}$$

being:  $$angle(U_{CD}) = atan2\left(\frac{imag(U_{CD})}{real(U_{CD})}\right)$$

- turning the system formed by the phase-to-phase voltages anti-clockwise by the angle $\alpha$ previously calculated:

$$U'_{RS} = |U_{RS}|e^{j[angle(U_{RS})-\alpha]}$$

$$U'_{ST} = |U_{ST}|e^{j[angle(U_{ST})-\alpha]}$$

$$U'_{TR} = |U_{TR}|e^{j[angle(U_{TR})-\alpha]}$$

- calculating the direct sequence phase-to-phase voltage (U'$_{CD}$), the inverse sequence phase-to-phase voltage (U'$_{CI}$) and the homopolar sequence phase-to-phase voltage (U'$_{CI}$) of the turned system of phase-to-phase voltages:

$$\begin{bmatrix} U'_{CD} \\ U'_{CI} \\ U'_{CH} \end{bmatrix} = \frac{1}{3}\begin{bmatrix} 1 & a & a^2 \\ 1 & a^2 & a \\ 1 & 1 & 1 \end{bmatrix}\begin{bmatrix} U'_{RS} \\ U'_{ST} \\ U'_{TR} \end{bmatrix}$$

- obtaining the system formed by the phase-to-neutral voltages (U'$_R$, U'$_S$, U'$_T$) from the system of phase-to-phase voltages (U'$_D$, U'$_I$, U'$_H$):

$$\begin{bmatrix} U'_R \\ U'_S \\ U'_T \end{bmatrix} = \begin{bmatrix} 1 & 1 & 1 \\ a^2 & a & 1 \\ a & a^2 & 1 \end{bmatrix}\begin{bmatrix} U'_D \\ U'_I \\ U'_H \end{bmatrix}$$

utilizing the properties:

$$U'_D = U'_{CD}\varepsilon^{-1}$$

$$U'_I = U'_{CI}\varepsilon^{*-1}$$

$$U'_H = U'^{*}_I$$

being:

$$\varepsilon = -\frac{1}{2}\left(3 + j\sqrt{3}\right); \quad \varepsilon^* = -\frac{1}{2}\left(3 - j\sqrt{3}\right).$$

- turning the system formed by the phase-to-neutral voltages clockwise by the angle "α" previously calculated:

$$U_R = |U'_R|e^{j[angle(U'_R)-\alpha]}$$

$$U_S = |U'_S|e^{j[angle(U'_S)-\alpha]}$$

$$U_T = |U'_T|e^{j[angle(U'_T)-\alpha]}$$

In a third aspect of the invention, a three-phase generating system is disclosed which comprises the method of electric balancing by vector synthesis defined in the first aspect of the invention.

In one embodiment of the third aspect of the invention, the three-phase generating system comprises: a three-phase power output (R, S, T); power cells connected in cascade by each power line; a control card for each power cell which is configured to measure the voltage supplied by the cell with which it is associated and modify the voltage of the same; a control device connected to each control card and to the three-phase power output (R, S, T) to obtain the magnitude and the phase of each phase-to-neutral voltage ($U_R$, $U_S$, $U_T$); such that the control device modifies the magnitude and the phase of the voltage of each cell by means of each control card until the output of the three-phase generating system reaches the new phase-to-neutral voltages ($U_R''$, $U_S''$, $U_T''$). The power cell can also comprise a bypass circuit where the bypass circuit is closed when a closing instruction is received from the control card.

In a fourth aspect of the invention, a three-phase generating system, which comprises the method of converting phase-to-phase voltages to phase-to-neutral voltages defined in the second aspect of the invention.

## BRIEF DESCRIPTION OF THE FIGURES

Figure 1 - medium-voltage variable speed drive comprising a control device where the method of electric balancing by vector synthesis of the present invention is incorporated.

Figure 2 - power cell contained in the medium-voltage variable speed drive.

Figure 3 - representation of a five-cell variable speed drive in phase and failure in three cells (cells C4, C5 and B5 which are not shown in the figure as they have failed).

Figure 4 - medium-voltage variable speed drive with imbalances caused by the difference of the power cells in terms of their manufacture.

Figure 5 - breakdown of an imbalanced system in its direct, inverse and homopolar sequences.

Figure 6 - vector breakdown of the direct sequence "SD".

Figure 7 - vector breakdown of the inverse sequence "SI".

Figure 8 - breakdown of an imbalanced system into its direct, inverse and homopolar sequences with inverse sequence cancelation.

Figure 9 - flow diagram of the method of electric balancing by vector synthesis of the present invention.

Figure 10 - application of the law of cosines in the method of electric balancing by vector synthesis.

Figure 11 - displacement by small displacements of a phase-to-neutral voltage from an initial position (imbalance) to a final position (balance).

Figure 12 - vector representation of the three phase-to-neutral voltages as the initial step of the method of electric balancing by geometric vector synthesis.

Figure 13 - vector representation of the three phase-to-neutral voltages shown in Figure 12 where two of the phase-to-neutral voltages are placed on the imaginary axis of the complex plane.

Figure 14 - construction of an equilateral triangle from the vector representation shown in Figure 13.

Figure 15 - vector representation of the phase-to-neutral voltages shown in Figure 14 where the third voltage is greater than or equal to the height of the equilateral triangle above the horizontal and with a turn of the third voltage until the intersection with the vertex (real axis) of the equilateral triangle.

Figure 16 - vector representation of the phase-to-neutral voltages shown in Figure 14 where the third voltage is less than the height of the equilateral triangle above the horizontal and with a turn of the third voltage until the intersection with the vertex (real axis) of the equilateral triangle.

Figures 17, 18, 19 - vector representation of the three balanced phase-to-neutral voltages according to the method of electric balancing by geometric vector synthesis with displacement of the vectors, calculation of the relative angles and calculation of the angles with respect to the real axis, respectively.

## PREFERRED EMBODIMENT OF THE INVENTION

An exemplary embodiment of the invention is described below in an illustrative and non-limiting manner.

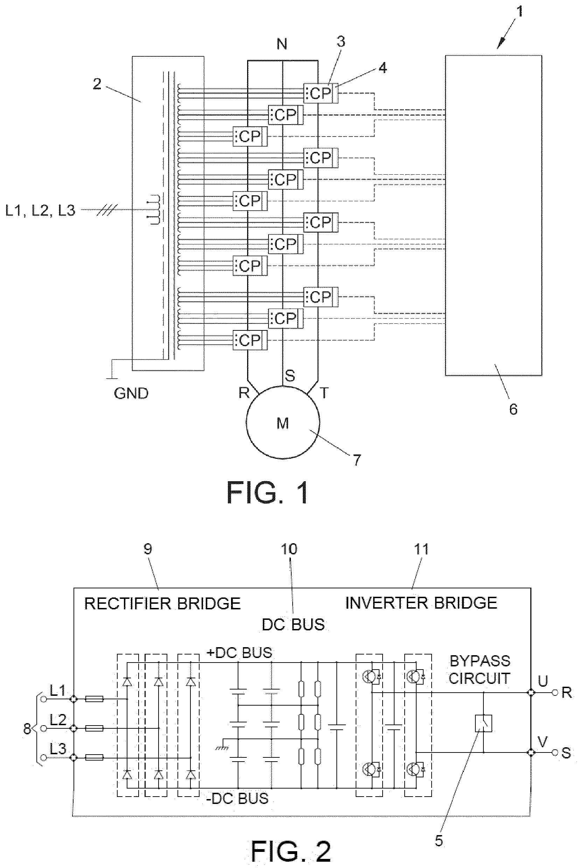

For the exemplary embodiment, Figure 1 shows the topology of a medium-voltage variable speed drive **1** whose three-phase output (R, S, T) is connected to a motor **7**. The medium-voltage variable speed drive **1** comprises a phase-shift rectifier transformer **2**, power cells **3** connected in cascade, a control card **4,** a control device **6** and a bypass circuit **5**. The control card **4** is responsible for measuring the voltage supplied by the cell with which it is associated and for detecting whether there was a fault in the cell. The control card **4** communicates with the control device **6**. The control device **6** can give instructions to the control card **4** to close the bypass circuit **5** in the event that the power cell fails. Alternatively, the control card **4** can close the bypass circuit **5** automatically when the card **4** detects a fault in the power cell **3**. The method of electric balancing (voltages or currents) by vector synthesis is implemented in the control device **6** such that acting on each one of the power cells, the power output (phase-to-neutral voltages and phase-to-phase voltages) of the variable speed drive **1** is balanced. The action of the control device **6** on each power cell **3** is carried out by means of the modification of the magnitude and the phase of the voltage or the current of each one of the power cells independently according to the method of the present invention. As described below, the method of the present invention allows a power output that is completely balanced in terms of phase-to-phase (and phase-to-neutral) voltages or currents to be obtained both if there is a failure in one of the power cells and if there are power variations in one of the power cells due to structural differences in the manufacture of the same and/or in the voltage/current supply received by the power cells.

The power cell **3** is shown in Figure **2**. The power cell **3** consists of an AC-DC-AC basic monopolar inverter circuit. The cell has three alternating current **L1, L2, L3** inputs **8** which are connected to a rectifier bridge **9** which is a diode bridge. The rectifier bridge **9** is connected to a DC BUS **10** and said DC BUS to an inverter bridge **11**. The bypass circuit **5** is placed at the output of the inverter bridge. The inverter bridge is composed of IGBTs which generate monophasic waves of PWM voltage.

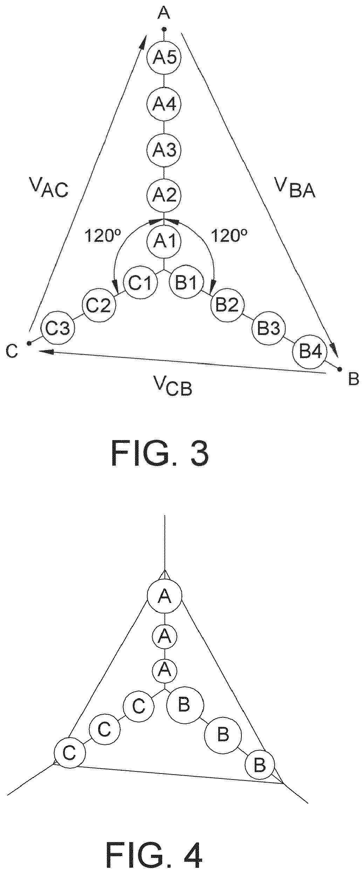

In the event of failure of one or various cells, the bypass circuit **5** is closed, creating an alternating current path which allows the variable speed drive **1** to continue operating. The output would be an imbalanced system as is shown in Figure 3. In this case, Figure 3 shows the output of a five-cell variable speed drive in phase and failure in three cells (cells C4, C5 and B5 which are not shown in the figure as they have failed).

Circumstances may also arise whereby the cells do not deliver the same voltage (or current) which generates imbalances at the output of the average voltage regulator **1**. These types of imbalances may result in situations like those represented in Figure 4. Like the case of a failed power cell, the control card **4** detects the power variations of the cell with which it is associated as it carries out continuous measuring of the power of the power cell.

It should be remembered that the phase-to-neutral voltages ($U_R$, $U_S$, $U_T$) of the variable speed drive **1** are the result of the sum of each one of the cells of the corresponding phase (R, S, T; they may also be found in the prior art as U, V, W). In order to obtain the phase-to-phase voltages ($U_{RS}$, $U_{ST}$, $U_{TR}$) in a three-phase electric system, the phase-to-neutral voltages simply have to be subtracted in a pairwise manner ($U_{RS} = U_S - U_R$; $U_{ST} = U_T - U_S$; $U_{TR} = U_R - U_T$). Measuring the phase-to-phase voltages at the output of a transformer is easy and known in the prior art. However, obtaining the phase-to-neutral voltages from the phase-to-phase voltages is not known in the prior art. In the present disclosure, phase-to-phase voltages or system of phase-to-phase voltages such as the combination of the phase-to-phase voltages are mentioned indistinctly, the latter being preferred for its graphic representation as vectors (phasors) of the phase-to-phase voltages.

In light of the above, it must be taken into account that any system (variable speed drive, converter, etc.) that has a failed power cell, will have imbalances both its phase-to-neutral voltages and its phase-to-phase voltages.

Before going into detail on the method of the present invention, it is necessary to remember certain concepts. Fortescue's Theorem or method of the symmetric components allows an unbalanced polyphase system in steady state (with n phases) to be written in a general manner as the sum of "n" balanced systems applying the superposition principle. By applying Fortescue's Theorem to three-phase systems (n=3):

$$\begin{bmatrix} U_D \\ U_I \\ U_H \end{bmatrix} = \frac{1}{3} \begin{bmatrix} 1 & a & a^2 \\ 1 & a^2 & a \\ 1 & 1 & 1 \end{bmatrix} \begin{bmatrix} U_R \\ U_S \\ U_T \end{bmatrix}$$

$$U_D = \frac{1}{3}(U_R + U_S a + U_T a^2)$$

$$U_I = \frac{1}{3}(U_R + U_S a^2 + U_T a)$$

$$U_H = \frac{1}{3}(U_R + U_S + U_T)$$

being

$$a = e^{j\frac{2\pi}{3}}$$

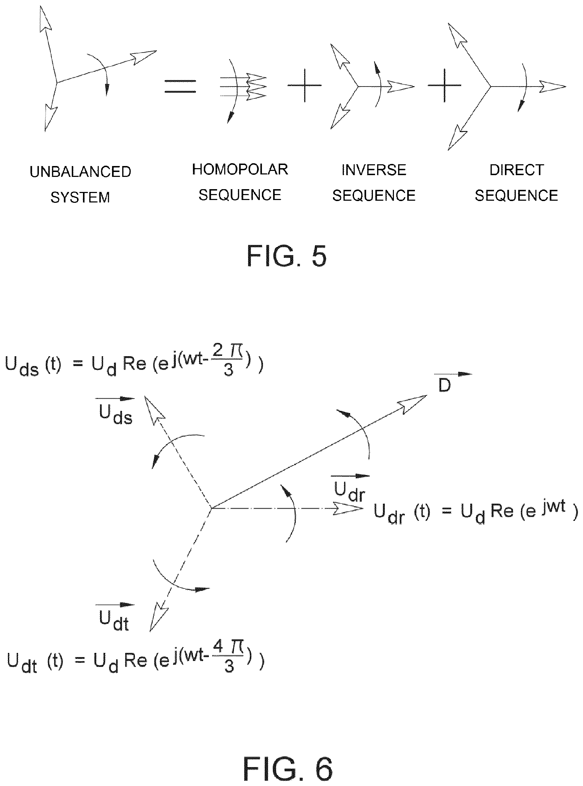

The geometric representation of Fortescue's Theorem is represented in Figure 5.

This same reasoning can be extended to the transient state using the voltage spatial vector (if the harmonics are not considered) and more extensively (including the harmonics) using the voltage spatial phasor:

$$\vec{U}(t) = \vec{D}(t) + \vec{I}(t)$$

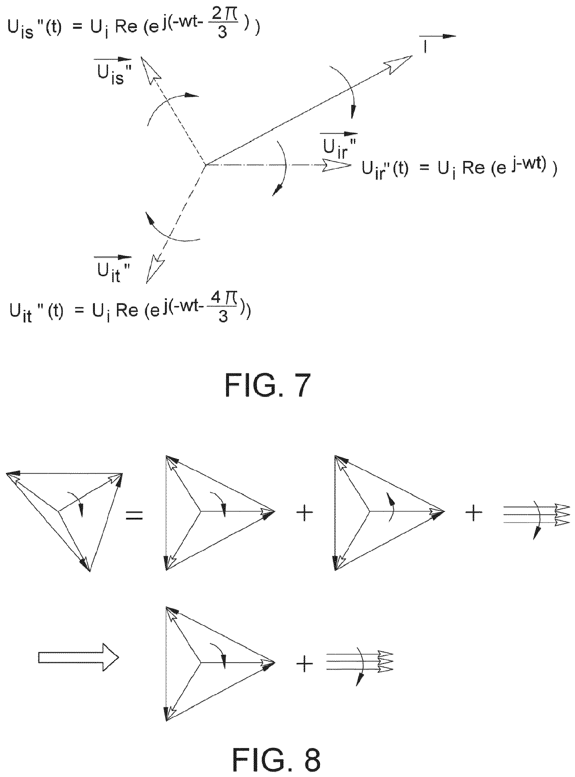

In which $\vec{U}(t)$ represents the voltage spatial phasor of the electric system of phase-to-phase voltages, $\vec{D}(t)$ the direct sequence spatial phasor (Figure 6) and $\vec{I}(t)$ the inverse sequence spatial phasor (Figure 7). If the harmonics are not considered, only spatial vectors come into question.

In the sinusoidal steady state, the modules of the vectors $\vec{D}(t), \vec{I}(t)$ are constant and their turn speed also.

An electric system of phase-to-neutral unbalanced voltages can be broken down into three electric systems called direct, inverse and homopolar sequence. However, the system of phase-to-phase voltages does not contain homopolar components.

If the inverse sequence $U_I$ (o $\vec{I}(t)$) is removed from the original system of voltages (phase-to-neutral or phase-to-phase), the new voltage system will not have an inverse sequence and therefore will not be balanced (Figure 8).

There are at least two ways of removing the inverse sequence. The first way of removing the inverse sequence is: to determine the inverse sequence level, calculating the symmetric components of the system of phase-to-neutral voltages; fixing the inverse sequence value at zero and calculating the resulting phase-to-neutral voltages by means of applying Fortescue's Theorem to the inverse sequence. This method maintains the starting direct and homopolar sequence level and has the drawback that the phase-to-neutral voltages available are insufficient for generating said direct and homopolar sequence level, therefore it would require a subsequent readjustment of the direct and sequence level which adapts the balanced system to the phase-to-neutral voltages available.

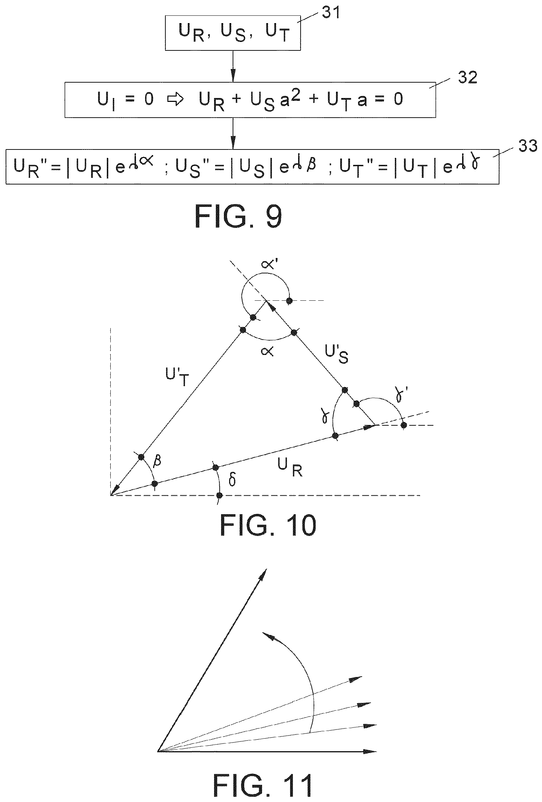

The second way is obtaining the phase-to-neutral voltages (Fig. 9 - 31), allowing the free angular displacement (new phases) of the phase-to-neutral voltages (Fig. 9 - 32) until the system of phase-to-phase voltages is balanced (Fig. 9 - 33). The present invention discloses two embodiments of this second way of removing the inverse sequence.

Two embodiments of the method of continuous balancing by vector synthesis are going to be described below. The first embodiment is called method of balancing by symmetric vector synthesis and the second embodiment is called method of balancing by geometric vector synthesis. Both embodiments perform the same inventive concept which is: to obtain the phase-to-neutral voltages ($U_R$, $U_S$, $U_T$); calculate a new phase for each phase-to-neutral voltage such that the inverse sequence voltage ($U_I$) is zero ($U_I = 0 = U_R + U_S a^2 + U_T a$), keeping constant the modules of the phase-to-neutral voltages ($|U_R|$, $|U_S|$, $|U_T|$) and calculate the new phase-to-neutral voltages ($U_R$", $U_S$", $U_T$") which balance the three-phase generating system from the phases calculated in the previous step. That is to say, the new phase-to-neutral voltages ($U_R$", $U_S$", $U_T$") which balance the system in terms of phase-to-phase voltages have the same modules ($|U_R"| = |U_R|$, $|U_S"| = |U_S|$, $|U_T"| = |U_T|$) as the phase-to-neutral voltages obtained and the phases previously calculated.

The first embodiment called method of balancing by symmetric vector synthesis comprises the following steps: It is based on the knowledge and the position of the phase-to-neutral voltages $U_R$, $U_S$, $U_T$ previously obtained.

The inverse sequence is removed:

$$U_I = \frac{1}{3}(U_R + U_S a^2 + U_T a)$$

$$0 = U_R + U_S a^2 + U_T a$$

As the modules of the phase-to-neutral voltages are known, the following conversion can be carried out:

$$0 = U_R + U_S' + U_T'$$

being:

$$|U_S'| = |U_S| \quad \text{and} \quad U_S' = U_S a^2$$

$$|U_T'| = |U_T| \quad \text{and} \quad U_T' = U_T a$$

applying the law of cosines (see Figure 10):

$$\alpha = acos\left[\frac{|U'_S|^2 + |U'_T|^2 - |U_R|^2}{2|U'_S||U'_T|}\right]$$

$$\beta = acos\left[\frac{|U_R|^2 + |U'_T|^2 - |U'_S|^2}{2|U_R||U'_T|}\right]$$

$$\gamma = acos\left[\frac{|U_R|^2 + |U'_S|^2 - |U'_T|^2}{2|U_R||U'_S|}\right]$$

or in other words:

$$\alpha = acos\left[\frac{|U_S|^2 + |U_T|^2 - |U_R|^2}{2|U_S||U_T|}\right]$$

$$\beta = acos\left[\frac{|U_R|^2 + |U_T|^2 - |U_S|^2}{2|U_R||U_T|}\right]$$

$$\gamma = acos\left[\frac{|U_R|^2 + |U_S|^2 - |U_T|^2}{2|U_R||U_S|}\right]$$

Once the angles $\alpha, \beta, \gamma$ are determined:

$$\gamma' = \delta + \pi - \gamma$$

$$\alpha' = \gamma' + \pi - \alpha$$

$$U'_S = |U_S|e^{j\gamma'}$$

$$U'_T = |U_T|e^{j\alpha'}$$

Undoing the change:

$$U_S a^2 = U'_S$$

$$U_T a = U'_T$$

Remembering that:

$$a = e^{j\frac{2\pi}{3}}$$

$$a^2 = e^{j\frac{4\pi}{3}} = e^{-j\frac{2\pi}{3}}$$

$$\frac{1}{a^2} = e^{j\frac{2\pi}{3}} = a$$

$$\frac{1}{a} = e^{-j\frac{2\pi}{3}} = e^{j\frac{4\pi}{3}} = a^2$$

$$U_S = U_S' a = |U_S| e^{j\left(\gamma' + \frac{2\pi}{3}\right)}$$

$$U_T = U_T' a^2 = |U_T| e^{j\left(\alpha' - \frac{2\pi}{3}\right)}$$

And how on one hand:

$$\gamma' + \frac{2\pi}{3} = \delta + \pi + \frac{2\pi}{3} - \gamma = \delta - \gamma + \frac{5\pi}{3}$$

And on the other hand:

$$\alpha' - \frac{2\pi}{3} = \gamma' + \pi - \alpha - \frac{2\pi}{3}$$

$$\alpha' - \frac{2\pi}{3} = \delta + \pi - \gamma + \pi - \alpha - \frac{2\pi}{3}$$

$$\alpha' - \frac{2\pi}{3} = \delta - (\alpha + \gamma) - \frac{4\pi}{3}$$

Lastly:

$$U_R'' = |U_R| e^{j\delta}$$

$$U_S'' = |U_S| e^{j\left(\delta - \gamma + \frac{5\pi}{3}\right)}$$

$$U_T'' = |U_T| e^{j\left(\delta - (\alpha + \gamma) + \frac{4\pi}{3}\right)}$$

The phase-to-neutral voltages $U_R''$. $U_S''$, $U_T''$ calculated here have the same module as the phase-to-neutral voltages $U_R$, $U_S$, $U_T$ obtained at the start but are out of phase at an angle with respect to the same. These phase-to-neutral voltages $U_R$, $U_S$, $U_T$ calculated here are the voltages which balance the three-phase generating system and which, for reasons of clarity, have been called $U_R''$, $U_S''$, $U_T''$ in the claims.

In reality there are two solutions for the same problem, one is the previous view and the other is the image of $U_S'$ and $U_T'$ taking the vector $U_R$ as the axis of symmetry:

$$U_R'' = |U_R|e^{j\delta}$$

$$U_S'' = |U_S|e^{j\left(\frac{\pi}{3}+\gamma+\delta\right)}$$

$$U_T'' = |U_T|e^{j\left(\delta+\alpha+\gamma+\frac{4\pi}{3}\right)}$$

The solution which minimizes the angular displacement between the original vectors $U_S$ and $U_T$ with respect to the new vectors calculated $U_S''$, $U_T''$ should be selected from these two solutions.

In addition and optionally, the previous steps are repeated with the other two phase-to-neutral voltages (first $U_S$ and then $U_T$) maintained in their original position (in the previous steps $U_R$ was maintained. In this way, four additional solutions are obtained. If the six solutions are calculated, the optimal solution is the one which minimizes the angular displacement (angular transition) of the three original voltages $U_R$, $U_S$, $U_T$ to three balance voltages $U_R''$, $U_S''$, $U_T''$.

Once the final phase-to-neutral voltage system ($U_R''$, $U_S''$, $U_T''$) is determined, it is carried out the transition progressively to avoid a current transition in the load. To this end, the angle difference between the voltages of the new system ($U_R''$, $U_S''$, $U_T''$) and the original system ($U_R$, $U_S$, $U_T$) is divided into "n" translations and the "n" position angles are moved progressively from the original position to the final position (Figure 11).

There is another way of obtaining the angles of the phase-to-neutral voltages so that the resulting system of phase-to-phase voltages is balanced. This other method also always allows the system of phase-to-phase voltages of the greatest amplitude possible to be obtained and also guarantees the absence of inverse sequence in the resulting system of phase-to-neutral voltages. This other way is described in the second embodiment called the method of balancing by geometric vector synthesis.

The second embodiment called the method of balancing by geometric vector synthesis comprises the following steps:

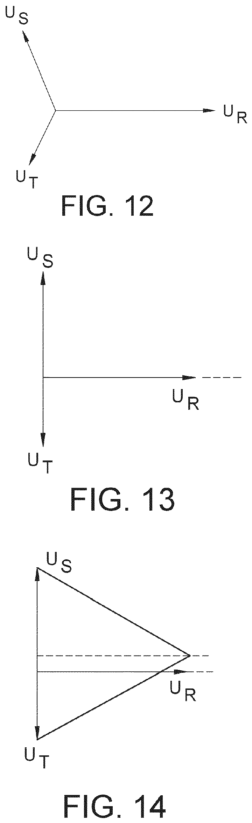

1. it is started from the original system of phase-to-neutral voltages (Figure 12);

2. among the three phase-to-neutral voltages available ($U_R$, $U_S$, $U_T$), the two low value phase-to-neutral voltages ($U_S$, $U_T$) are selected and are placed on the imaginary axis of the complex plane such that the greater of the two ($U_S$) is positive and the lower ($U_T$) is negative; the third voltage ($U_R$) is placed orientated to the real axis (Figure 13); (the values that are compared are the modules of the phase-to-neutral voltages);

3. the center point formed by the two low value voltages ($U_S$, $U_T$) is calculated, placing the origin of the real axis on the calculated center point and an equilateral triangle is plotted taking as the side the sum of the two low value phase-to-neutral voltages (Figure 14);

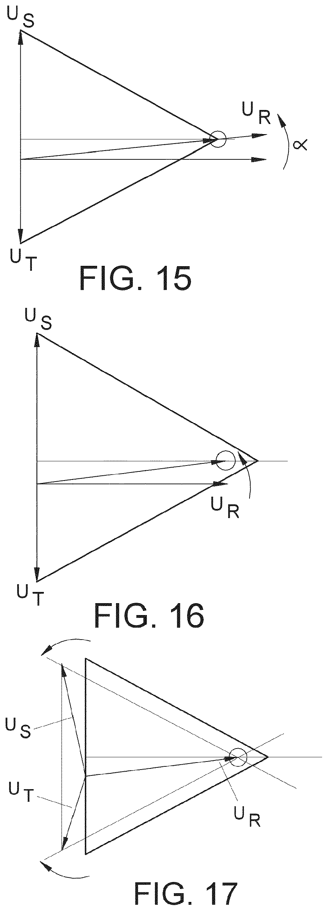

4. if the turn of the third voltage ($U_R$) over the height of the equilateral triangle is greater than or equal to the height of the equilateral triangle over the horizontal, the third voltage ($U_R$) is turned until it intersects with the vertex (real axis) of the equilateral triangle (Figure 15), producing a new third phase-to-neutral voltage ($U_R''$) which balances the system together with the other two phase-to-neutral voltages ($U_S$, $U_T$). The new third phase-to-neutral voltage ($U_R''$) will have the following module and argument:

$$U_R'' = |U_R|e^{j\alpha}$$

$$\alpha = atan\left[\frac{|U_S| - |U_T|}{|U_S| + |U_T|}\frac{1}{\sqrt{3}}\right]$$

$$|U_R''| = \frac{(|U_S| + |U_T|)}{cos\alpha}\frac{\sqrt{3}}{2}$$

As always and optionally, once the system of phase-to-neutral voltages is determined, the optimal alignment with respect to the starting system of voltages is sought so that the resulting angular movement is minimal. And the movement from the original system of phase-to-neutral voltages to the new one would have to be progressive.

5. if the turn of the third phase-to-neutral voltage ($U_R$) over the height of the equilateral triangle is less than the height of the equilateral triangle, the third phase-to-neutral voltage ($U_R$) is turned until it intersects with the real axis (Figure 16);

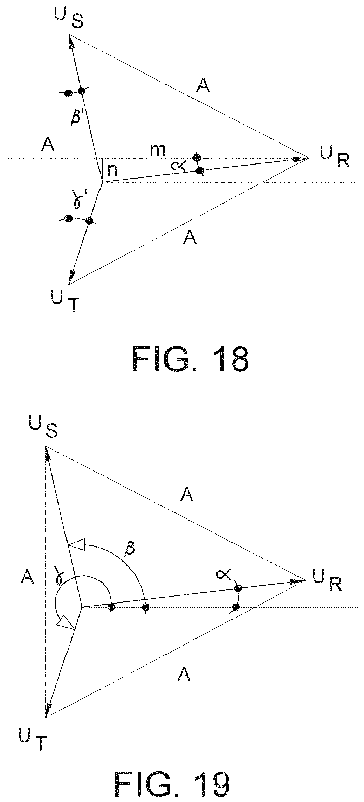

6. plot both lines parallel to the sides of the equilateral triangle through the intersection point of the third phase-to-neutral voltage with the real axis and turn the two low phase-to-neutral voltages (lower module) until they intersect with the parallel lines (Figure 17), thus obtaining the new balanced phase-to-neutral voltages ($U_R$", $U_S$", $U_T$") (Figures 19):

$$U_R{}'' = |U_R|e^{j\alpha}$$

$$U_S{}'' = |U_S|e^{j\beta}$$

$$U_T{}'' = |U_T|e^{j\gamma}$$

Mathematically (see Figure 18):

$$n = \frac{|U_S| - |U_T|}{2}$$

$$\alpha = asin\left(\frac{n}{|U_R|}\right) = asin\left(\frac{|U_S| - |U_T|}{2|U_R|}\right)$$

$$m = |U_R|cos\alpha$$

$$|U_S|sin\beta = A\frac{\sqrt{3}}{2} - m$$

$$|U_S|cos\beta = \frac{A}{2} + n$$

$$sin^2\beta + cos^2\beta = 1$$

becoming:

$$A^2 + A\left(n - m\sqrt{3}\right) + (m^2 + n^2 - |U_s|^2) = 0$$

solving:

$$A_0 = \frac{m\sqrt{3} - n + \sqrt{\left(n - m\sqrt{3}\right)^2 - 4(m^2 + n^2 - |U_s|^2)}}{2}$$

$$A_1 = \frac{m\sqrt{3} - n - \sqrt{\left(n - m\sqrt{3}\right)^2 - 4(m^2 + n^2 - |U_s|^2)}}{2}$$

The greater of the two solutions is taken: $A = max(A_0, A_1)$
And now, the remainder of variables is obtained:

$$\beta = \frac{\pi}{2} + \text{acos}\left(\frac{\frac{A}{2} + n}{|U_s|}\right)$$

$$\gamma = 2\pi - \alpha - \beta$$

And lastly:

$$U_R{}'' = |U_R|e^{j\alpha}$$

$$U_S{}'' = |U_S|e^{j\beta}$$

$$U_T{}'' = |U_T|e^{j\gamma}$$

As always and optionally, once the system of phase-to-neutral voltages is determined, the optimal alignment with respect to the starting system of voltages is sought so that the resulting angular movement is minimal. And the movement from the original system of phase-to-neutral voltages to the new one would have to be progressive.

Up to this point, the method of electric balancing in a three-phase generating system has been described in which it was based on obtaining the phase-to-neutral voltages. However, it is more common to measure the phase-to-phase voltages in the three-phase generating system and not the phase-to-neutral voltages. It is for this reason that a method for obtaining the system of phase-to-neutral voltages ($U_R$, $U_S$, $U_T$) in a three-phase electric system in a steady state is described below from its system of phase-to-phase voltages ($U_{RS}$, $U_{ST}$, $U_{TR}$).

In order that the conversion is possible, it is necessary to verify the following conditions:

1. the vector sum of the phase-to-phase voltages is zero:

$$U_{RS} + U_{ST} + U_{TR} = 0$$

2. there is no artificial displacement of the neutral point, that is to say, the homopolar component comes exclusively from the imbalance of the charges. If the displacement of the neutral point is known, the method is valid by adding the starting displacement of the neutral point to the phase-to-neutral voltages obtained.

In a three-phase electric system, in order to obtain the phase-to-phase voltages, the phase-to-neutral voltages have to be subtracted in a pairwise manner; this is what we would call a direct relation:

$$U_{RS} = U_S - U_R$$

$$U_{ST} = U_T - U_S$$

$$U_{TR} = U_R - U_T$$

$$\begin{bmatrix} U_{RS} \\ U_{ST} \\ U_{TR} \end{bmatrix} = \begin{bmatrix} -1 & 1 & 0 \\ 0 & -1 & 1 \\ 1 & 0 & -1 \end{bmatrix} \begin{bmatrix} U_R \\ U_S \\ U_T \end{bmatrix}$$

However, the inverse transformation cannot be carried out directly since the conversion matrix is not invertible or in other words:

$$det \begin{bmatrix} -1 & 1 & 0 \\ 0 & -1 & 1 \\ 1 & 0 & -1 \end{bmatrix} = 0$$

Unless there were a conversion of phase-to-phase voltages to phase-to-neutral voltages or vice versa without an external addition of common mode (or homopolar) voltage and the homopolar component can only come from an imbalance of charges and not from sources, the inverse relation exists and it is possible to determine the phase-to-neutral voltages from the phase-to-phase voltages.

If there is a homopolar component in the source of voltages and it is known, that is to say, if there is displacement from the neutral point in the voltages generated, the method is valid, applying the displacement of the neutral point at the end of the conversion.

The base of the conversion is based on utilizing the properties of the symmetric components.

As has already been described, Fortescue's theorem states that any electric system can be broken down into three balanced systems, one direct sequence, another inverse sequence and another zero or homopolar sequence (Figure 5).

The mathematical formulation of the breakdown is as follows:

$$\begin{bmatrix} U_R \\ U_S \\ U_T \end{bmatrix} = \begin{bmatrix} 1 & 1 & 1 \\ a^2 & a & 1 \\ a & a^2 & 1 \end{bmatrix} \begin{bmatrix} U_D \\ U_I \\ U_H \end{bmatrix}$$

wherein:

$$a = e^{j\frac{2\pi}{3}}$$

This can be done both for the system of phase-to-neutral voltages and the system of phase-to-phase voltages:

$$\begin{bmatrix} U_{RS} \\ U_{ST} \\ U_{TR} \end{bmatrix} = \begin{bmatrix} 1 & 1 & 1 \\ a^2 & a & 1 \\ a & a^2 & 1 \end{bmatrix} \begin{bmatrix} U_{CD} \\ U_{CI} \\ U_{CH} \end{bmatrix}$$

Although in the system of phase-to-phase voltages, the homopolar component is always zero $U_{CH} = 0$.

Mathematically, it is possible to consider that the original system of phase-to-phase voltages would have a homopolar component (something that in reality is not possible); in such case, the method described would not be valid, however, in a real industrial electric system, this is impossible.

On the other hand, in real electric networks, there are transformers and the transformers cancel the homopolar components, therefore the source of neutral point displacement (if there were one) is canceled by the these transformers and the method is indeed applicable.

There are various interesting relations between the symmetric components of the system of phase-to-neutral and phase-to-phase voltages.

a) Constant sequential relation.

The quotient between the direct sequence of the system of phase-to-phase voltages and the direct sequence of the system of phase-to-neutral voltages is constant:

$$\frac{U_{CD}}{U_D} = \varepsilon \blacktriangleright U_D = U_{CD}\varepsilon^{-1}$$

And the same occurs with the inverse sequence systems:

$$\frac{U_{CI}}{U_I} = \varepsilon^* \blacktriangleright U_I = U_{CI}\varepsilon^{*-1}$$

being:

$$\varepsilon = -\frac{1}{2}\left(3 + j\sqrt{3}\right)$$

$$\varepsilon^* = -\frac{1}{2}\left(3 - j\sqrt{3}\right)$$

Therefore, the direct and inverse sequence of the system of phase-to-neutral voltages is immediately obtained if we know the direct and inverse sequence of the system of phase-to-phase voltages.

b) Angular relation

It is deduced from the previous point that the angle between the direct sequence of the system of phase-to-phase voltages and of phase-to-neutral voltages is always -30°.
Therefore, if it is known the angle of the vector of direct sequence of the system of phase-to-phase voltages, the angular position of the system of phase-to-neutral voltages is immediately obtained.

c) Relation between inverse and homopolar sequence

In a system in which the direct sequence is aligned with the real axis, the inverse and homopolar sequence are conjugates.

$$\text{If} \quad U_D \in \mathcal{R} \blacktriangleright U_H = U_I^*$$

Taking the foregoing into account, the method of converting phase-to-phase voltages to phase-to-neutral voltages comprises the following steps:

1. obtaining the symmetric components of the system of phase-to-phase voltages, that is to say, its direct, inverse and homopolar sequence:

$$\begin{bmatrix} U_{CD} \\ U_{CI} \\ U_{CH} \end{bmatrix} = \frac{1}{3}\begin{bmatrix} 1 & a & a^2 \\ 1 & a^2 & a \\ 1 & 1 & 1 \end{bmatrix}\begin{bmatrix} U_{RS} \\ U_{ST} \\ U_{TR} \end{bmatrix}$$

2. calculating the angle of the direct sequence and subtracting $\frac{\pi}{6}$.

$$\alpha = angle(U_{CD}) - \frac{\pi}{6}$$

where:

$$angle(U_{CD}) = atan2\left(\frac{imag(U_{CD})}{real(U_{CD})}\right);$$

3. turning the system of phase-to-phase voltages anticlockwise by this angle $\alpha$; this ensures that the associated system of phase-to-neutral voltages is aligned with the real axis:

$$U'_{RS} = |U_{RS}|e^{j[angle(U_{RS})-\alpha]}$$

$$U'_{ST} = |U_{ST}|e^{j[angle(U_{ST})-\alpha]}$$

$$U'_{TR} = |U_{TR}|e^{j[angle(U_{TR})-\alpha]}$$

4. obtaining the symmetric components of this new system:

$$\begin{bmatrix} U'_{CD} \\ U'_{CI} \\ U'_{CH} \end{bmatrix} = \frac{1}{3}\begin{bmatrix} 1 & a & a^2 \\ 1 & a^2 & a \\ 1 & 1 & 1 \end{bmatrix}\begin{bmatrix} U'_{RS} \\ U'_{ST} \\ U'_{TR} \end{bmatrix}$$

Utilizing the properties:

$$U'_D = U'_{CD}\varepsilon^{-1}$$

$$U'_I = U'_{CI}\varepsilon^{*-1}$$

$$U'_H = U'^{*}_I$$

being:

$$\varepsilon = -\frac{1}{2}\left(3 + j\sqrt{3}\right); \ \varepsilon^* = -\frac{1}{2}\left(3 - j\sqrt{3}\right).$$

The phase-to-neutral voltages of the system are obtained:

$$\begin{bmatrix} U'_R \\ U'_S \\ U'_T \end{bmatrix} = \begin{bmatrix} 1 & 1 & 1 \\ a^2 & a & 1 \\ a & a^2 & 1 \end{bmatrix}\begin{bmatrix} U'_D \\ U'_I \\ U'_H \end{bmatrix}$$

These voltages are turned by an angle $\alpha$ with respect to the real phase-to-neutral voltages corresponding to the original system of phase-to-phase voltages.

5. turning the system of phase-to-phase voltages clockwise by the angle $\alpha$ calculated in point 2 to place the system in its original position:

$$U_R = |U'_R|e^{j[angle(U'_R)-\alpha]}$$

$$U_S = |U'_S|e^{j[angle(U'_S)-\alpha]}$$

$$U_T = |U'_T|e^{j[angle(U'_T)-\alpha]}$$

The system of phase-to-neutral voltages corresponding to the original system of phase-to-phase voltages is thus determined.

**Claims**

1. A method of electric balancing by vector synthesis in a three-phase generating system, **characterized in that** it comprises:

 i) obtaining (31) the module and phase of each phase-to-neutral output voltage (R, S, T) of the three-phase system forming a system of phase-to-neutral voltages ($U_R$, $U_S$, $U_T$);
 ii) calculating (32) a new phase for each phase-to-neutral voltage, keeping constant the module of each phase-to-neutral voltage such that the following condition is met:

$$U_R + U_S a^2 + U_T a = 0$$

 being

$$a = e^{j\frac{2\pi}{3}} \;;$$

 iii) calculating (33) the new phase-to-neutral voltages ($U_R$", $U_S$", $U_T$") which balance the three-phase generating system from the modules of each phase-to-neutral voltage obtained ($|U_R|$, $|U_S|$, $|U_T|$) in step i) and of the phases calculated in step ii).

2. The method of electric balancing by vector synthesis in a three-phase generating system according to claim 1, **characterized in that** the steps ii) and iii) also comprise:

 a) maintaining a phase-to-neutral voltage ($U_R$) in its original position;
 b) carrying out the following conversion for the other two phase-to-neutral voltages (Us, $U_T$):

$$0 = U_R + U'_S + U'_T$$

 being:

$$|U'_S| = |U_S| \quad \text{and} \quad U'_S = U_S a^2$$

$$|U'_T| = |U_T| \quad \text{and} \quad U'_T = U_T a$$

 c) applying the law of cosines to calculate the angles "α", "β", "γ" which denote the angles forming the voltages *U'$_S$ and U'$_T$, U'$_T$ and U$_R$ and U$_R$ and U'$_S$,* respectively:

$$\alpha = acos \left[ \frac{|U'_S|^2 + |U'_T|^2 - |U_R|^2}{2|U'_S||U'_T|} \right]$$

$$\beta = acos \left[ \frac{|U_R|^2 + |U'_T|^2 - |U'_S|^2}{2|U_R||U'_T|} \right]$$

$$\gamma = acos \left[ \frac{|U_R|^2 + |U'_S|^2 - |U'_T|^2}{2|U_R||U'_S|} \right]$$

 expressed as a function of the phase-to-neutral voltages:

$$\alpha = acos\left[\frac{|U_S|^2 + |U_T|^2 - |U_R|^2}{2|U_S||U_T|}\right]$$

$$\beta = acos\left[\frac{|U_R|^2 + |U_T|^2 - |U_S|^2}{2|U_R||U_T|}\right]$$

$$\gamma = acos\left[\frac{|U_R|^2 + |U_S|^2 - |U_T|^2}{2|U_R||U_S|}\right]$$

d) calculating the phase - $\gamma'$- of the voltage $U'_S$ and the phase - $\alpha'$ - of the voltage $U'_T$ from the phase known - $\delta$ - of $U_R$ and the angles $\alpha, \beta, \gamma$ previously calculated:

$$\gamma' = \delta + \pi - \gamma$$

$$\alpha' = \gamma' + \pi - \alpha$$

$$U'_S = |U_S|e^{j\gamma'}$$

$$U'_T = |U_T|e^{j\alpha'}$$

e) undoing the change

$$U_S a^2 = U'_S$$

$$U_T a = U'_T$$

remembering that:

$$a = e^{j\frac{2\pi}{3}}$$

$$a^2 = e^{j\frac{4\pi}{3}} = e^{-j\frac{2\pi}{3}}$$

$$\frac{1}{a^2} = e^{j\frac{2\pi}{3}} = a$$

$$\frac{1}{a} = e^{-j\frac{2\pi}{3}} = e^{j\frac{4\pi}{3}} = a^2$$

gives:

$$U_S = U'_S a = |U_S|e^{j(\gamma' + \frac{2\pi}{3})}$$

$$U_T = U_T' a^2 = |U_T| e^{j\left(\alpha' - \frac{2\pi}{3}\right)}$$

on the one hand:

$$\gamma' + \frac{2\pi}{3} = \delta + \pi + \frac{2\pi}{3} - \gamma = \delta - \gamma + \frac{5\pi}{3}$$

on the other:

$$\alpha' - \frac{2\pi}{3} = \gamma' + \pi - \alpha - \frac{2\pi}{3}$$

$$\alpha' - \frac{2\pi}{3} = \delta + \pi - \gamma + \pi - \alpha - \frac{2\pi}{3}$$

$$\alpha' - \frac{2\pi}{3} = \delta - (\alpha + \gamma) - \frac{4\pi}{3}$$

f) calculating a first solution for the phase-to-neutral voltages:

$$U_R'' = |U_R| e^{j\delta}$$

$$U_S'' = |U_S| e^{j\left(\delta - \gamma + \frac{5\pi}{3}\right)}$$

$$U_T'' = |U_T| e^{j\left(\delta - (\alpha + \gamma) + \frac{4\pi}{3}\right)}.$$

3. The method of electric balancing by vector synthesis in a three-phase generating system according to claim 2, **characterized in that** the method also comprises calculating a second solution for the phase-to-neutral voltages which is calculated as the image of U'$_S$ and U'$_T$ taking the vector U$_R$ as the axis of symmetry:

$$U_R'' = |U_R| e^{j\delta}$$

$$U_S'' = |U_S| e^{j\left(\frac{\pi}{3} + \gamma + \delta\right)}$$

$$U_T'' = |U_T| e^{j\left(\delta + \alpha + \gamma + \frac{4\pi}{3}\right)}$$

4. The method of electric balancing by vector synthesis in a three-phase generating system according to claims 2 and 3, **characterized in that** the method also comprises calculating the angular displacement between the phases of phase-to-neutral voltages $U_S''$ and $U_T''$ obtained in step i) and the phases of the phase-to-neutral voltages $U_S''$ and $U_T''$ calculated in the first solution and in the second solution; and choosing the solution with lower angular displacement from the first solution and the second solution.

5. The method of electric balancing by vector synthesis in a three-phase generating system according to any one of claims 2 to 3, **characterized in that** the method also comprises repeating all the sub steps modifying the sub step a) for each phase-to-neutral voltage ($U_S$", $U_T$"), giving six solutions which balance the electric system.

6. The method of electric balancing by vector synthesis in a three-phase generating system according to claim 1, **characterized in that** the steps ii) and iii) also comprise:

a) choosing the two low value phase-to-neutral voltages ($U_S$, $U_T$) of the three phase-to-neutral voltages available ($U_R$, $U_S$, $U_T$); placing the two low value phase-to-neutral voltages on the imaginary axis of the complex plane such that greater ($U_S$) of the two phase-to-neutral voltages is positive and the lower ($U_T$) of the two phase-to-neutral voltages is negative; and placing the third phase-to-neutral voltage ($U_R$) on the real axis;

b) calculating the center point of the sum of the two phase-to-neutral voltages placed on the imaginary axis; placing the origin of the real axis in the calculated center point and plotting an equilateral triangle taking as the side, the sum of the two phase-to-neutral voltages placed on the imaginary axis;

c) if the turn of the third phase-to-neutral voltage ($U_R$) over the height of the equilateral triangle is greater than or equal to the height of the equilateral triangle, turn the third phase-to-neutral voltage ($U_R$) until it intersects with the vertex of the equilateral triangle, producing a new third phase-to-neutral voltage ($U'_R$) whose module ($|U'_R|$) and angle "$\alpha$" with the real axis are calculated in the following manner:

$$\alpha = atan\left[\frac{|U_S| - |U_T|}{|U_S| + |U_T|}\frac{1}{\sqrt{3}}\right]$$

$$|U'_R| = \frac{(|U_S| + |U_T|)\sqrt{3}}{cos\alpha}\frac{\sqrt{3}}{2}$$

thus giving the phase-to-neutral balanced voltages which are the two low value phase-to-neutral voltages ($U_S$, $U_T$) and the new third phase-to-neutral voltage ($U'_R$);

d) if the turn of the third phase-to-neutral voltage ($U_R$) over the height of the equilateral triangle is less than the height of the equilateral triangle: turn the third phase-to-neutral voltage ($U_R$) until it intersects with the real axis: point of intersection; plot both lines parallel to the sides of the equilateral triangle through the point of intersection; turn the two low value phase-to-neutral voltages ($U_S$, $U_T$) until they intersect the parallel lines; thus determining the new balanced phase-to-neutral voltages:

$$U_R'' = |U_R|e^{j\alpha}$$

$$U_S'' = |U_S|e^{j\beta}$$

$$U_T'' = |U_T|e^{j\gamma}$$

which are calculated:

$$n = \frac{|U_S| - |U_T|}{2}$$

$$\alpha = asin\left(\frac{n}{|U_R|}\right) = asin\left(\frac{|U_S| - |U_T|}{2|U_R|}\right)$$

$$m = |U_R|cos\alpha$$

$$|U_S|sin\beta = A\frac{\sqrt{3}}{2} - m$$

$$|U_S|cos\beta = \frac{A}{2} + n$$

$$sin^2\beta + cos^2\beta = 1$$

becoming:

$$A^2 + A\left(n - m\sqrt{3}\right) + (m^2 + n^2 - |U_s|^2) = 0$$

solving:

$$A_0 = \frac{m\sqrt{3} - n + \sqrt{\left(n - m\sqrt{3}\right)^2 - 4(m^2 + n^2 - |U_s|^2)}}{2}$$

$$A_1 = \frac{m\sqrt{3} - n - \sqrt{\left(n - m\sqrt{3}\right)^2 - 4(m^2 + n^2 - |U_s|^2)}}{2}$$

the greater of the two solutions is taken: $A = max(A_0, A_1)$ and the remainder of the variables is calculated:

$$\beta = \frac{\pi}{2} + acos\left(\frac{\frac{A}{2} + n}{|U_S|}\right)$$

$$\gamma = 2\pi - \alpha - \beta$$

7. The method according to claim 1, **characterized in that** it also comprises calculating phase-to-neutral voltages ($U_R$, $U_S$, $U_T$) from the phase-to-phase voltages ($U_{RS}$, $U_{ST}$, $U_{TR}$) by means of the following sub-steps:

• calculating the system of phase-to-phase voltages ($U_{CD}$, $U_{CI}$, $U_{CH}$) formed by the direct sequence phase-to-phase voltage ($U_{CD}$), the inverse sequence phase-to-phase voltage ($U_{CI}$) and the homopolar sequence phase-to-phase voltage ($U_{CH}$), associated with the phase-to-phase voltages ($U_{RS}$, $U_{ST}$, $U_{TR}$):

$$\begin{bmatrix} U_{CD} \\ U_{CI} \\ U_{CH} \end{bmatrix} = \frac{1}{3}\begin{bmatrix} 1 & a & a^2 \\ 1 & a^2 & a \\ 1 & 1 & 1 \end{bmatrix}\begin{bmatrix} U_{RS} \\ U_{ST} \\ U_{TR} \end{bmatrix}$$

being

$$a = e^{j\frac{2\pi}{3}}$$

• calculating the angle "α" of the direct sequence and subtracting it $\pi/6$:

$$\alpha = angle(U_{CD}) - \frac{\pi}{6}$$

being:

$$angle(U_{CD}) = atan2\left(\frac{imag(U_{CD})}{real(U_{CD})}\right)$$

• turning the system formed by the phase-to-phase voltages anti-clockwise by the angle α previously calculated:

$$U'_{RS} = |U_{RS}|e^{j[angle(U_{RS})-\alpha]}$$

$$U'_{ST} = |U_{ST}|e^{j[angle(U_{ST})-\alpha]}$$

$$U'_{TR} = |U_{TR}|e^{j[angle(U_{TR})-\alpha]}$$

• calculating the direct sequence phase-to-phase voltage (U'$_{CD}$), the inverse sequence phase-to-phase voltage (U'$_{CI}$) and the homopolar sequence phase-to-phase voltage (U'$_{CI}$) of the turned system of phase-to-phase voltages:

$$\begin{bmatrix} U'_{CD} \\ U'_{CI} \\ U'_{CH} \end{bmatrix} = \frac{1}{3}\begin{bmatrix} 1 & a & a^2 \\ 1 & a^2 & a \\ 1 & 1 & 1 \end{bmatrix}\begin{bmatrix} U'_{RS} \\ U'_{ST} \\ U'_{TR} \end{bmatrix}$$

• obtaining the system formed by the phase-to-neutral voltages (U'$_R$, U'$_S$, U'$_T$) from the system of phase-to-phase voltages (U'$_D$, U'$_I$, U'$_H$):

$$\begin{bmatrix} U'_R \\ U'_S \\ U'_T \end{bmatrix} = \begin{bmatrix} 1 & 1 & 1 \\ a^2 & a & 1 \\ a & a^2 & 1 \end{bmatrix}\begin{bmatrix} U'_D \\ U'_I \\ U'_H \end{bmatrix}$$

using the properties:

$$U'_D = U'_{CD}\varepsilon^{-1}$$

$$U'_I = U'_{CI}\varepsilon^{*-1}$$

$$U'_H = U'^{*}_I$$

being:

$$\varepsilon = -\frac{1}{2}\left(3 + j\sqrt{3}\right); \ \varepsilon^* = -\frac{1}{2}\left(3 - j\sqrt{3}\right);$$

• turning the system formed by the phase-to-neutral voltage clockwise by the angle "α" previously calculated:

$$U_R = |U_R'|e^{j\left[angle\left(U_R'\right)-\alpha\right]}$$

$$U_S = |U_S'|e^{j\left[angle\left(U_S'\right)-\alpha\right]}$$

$$U_T = |U_T'|e^{j\left[angle\left(U_T'\right)-\alpha\right]}$$

8.  A three-phase generating system comprising the method of electric balancing by vector synthesis defined in a three-phase generating system according to any one of claims 1 to 7.

9.  A system according to claim 8, **characterized in that** it comprises:

    • a three-phase power output (R, S, T);
    • power cells (3) connected in cascade by each power line;
    • a control card (4) for each power cell (3) which is configured to measure the voltage supplied by the cell with which it is associated and modify the voltage of the same;
    • a control device (6) connected to each control card (4) and to the three-phase power output (R, S, T) to obtain the magnitude and the phase of each phase-to-neutral voltage ($U_R$, $U_S$, $U_T$);

    such that the control device (6) modifies the magnitude and the phase of the voltage of each cell by means of each control card until the output of the three-phase generating system reaches the new phase-to-neutral voltages ($U_R$", Us", $U_T$").

10. The system according to claim 9, **characterized in that** the power cell (3) also comprises a bypass circuit (5) where the bypass circuit is closed when a closing instruction is received from the control card (4).

FIG. 1

FIG. 2

FIG. 3

FIG. 4

UNBALANCED     HOMOPOLAR     INVERSE     DIRECT
SYSTEM     SEQUENCE     SEQUENCE     SEQUENCE

## FIG. 5

$$U_{ds}(t) = U_d \, Re \, (e^{j(wt - \frac{2\pi}{3})})$$

$$U_{dr}(t) = U_d \, Re \, (e^{jwt})$$

$$U_{dt}(t) = U_d \, Re \, (e^{j(wt - \frac{4\pi}{3})})$$

## FIG. 6

$$U_{is}''(t) = U_i \, Re \, (e^{j(-wt-\frac{2\pi}{3})})$$

$$\overrightarrow{U_{ir}''} \qquad U_{ir}''(t) = U_i \, Re \, (e^{j-wt})$$

$$U_{it}''(t) = U_i \, Re \, (e^{j(-wt-\frac{4\pi}{3})})$$

## FIG. 7

## FIG. 8

$$U_R, \; U_S, \; U_T \quad \text{—} \; 31$$

$$U_I = 0 \;\Rightarrow\; U_R + U_S a^2 + U_T a = 0 \quad \text{—} \; 32$$

$$U_R{}'' = |U_R|\, e^{j\alpha} \;;\; U_S{}'' = |U_S|\, e^{j\beta} \;;\; U_T{}'' = |U_T|\, e^{j\gamma} \quad \text{—} \; 33$$

FIG. 9

FIG. 10

FIG. 11

$U_S$

$U_R$

$U_T$

FIG. 12

$U_S$

$U_R$

$U_T$

FIG. 13

$U_S$

$U_R$

$U_T$

FIG. 14

$U_S$

$U_R$

$\alpha$

$U_T$

FIG. 15

$U_S$

$U_R$

$U_T$

FIG. 16

$U_S$

$U_T$

$U_R$

FIG. 17

FIG. 18

FIG. 19

Europäisches
Patentamt

European
Patent Office

Office européen
des brevets

# EUROPEAN SEARCH REPORT

Application Number

EP 18 38 2182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VARDHAN HARSHA ET AL: "Analysis of space vector diagram of a modular H-Bridge Converter with bypassed cells during fault condition", 2017 19TH EUROPEAN CONFERENCE ON POWER ELECTRONICS AND APPLICATIONS (EPE'17 ECCE EUROPE), JOINTLY OWNED IEEE-PELS AND EPE ASSOCIATION, 11 September 2017 (2017-09-11), XP033250381, DOI: 10.23919/EPE17ECCEEUROPE.2017.8098999 [retrieved on 2017-11-06] * abstract; figures 1,2,3 * * page 2 * | 1-5,7-10 | INV. H02M7/49 H02M1/32  ADD. H02M7/5387 H02M1/00 |
| X | LEZANA P ET AL: "Extended Operation of Cascade Multicell Converters Under Fault Condition", IEEE TRANSACTIONS ON INDUSTRIAL ELECTRONICS, IEEE SERVICE CENTER, PISCATAWAY, NJ, USA, vol. 56, no. 7, 1 July 2009 (2009-07-01), pages 2697-2703, XP011255355, ISSN: 0278-0046 * figures 1-4 * * Sections II B, III A * | 1-10 | |
| | -/-- | | TECHNICAL FIELDS SEARCHED (IPC)  H02M |

The present search report has been drawn up for all claims

| Place of search | Date of completion of the search | Examiner |
|---|---|---|
| The Hague | 21 September 2018 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 38 2182

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG WENPING ET AL: "Survey on Fault-Tolerant Techniques for Power Electronic Converters", IEEE TRANSACTIONS ON POWER ELECTRONICS, INSTITUTE OF ELECTRICAL AND ELECTRONICS ENGINEERS, USA, vol. 29, no. 12, 1 December 2014 (2014-12-01), pages 6319-6331, XP011556075, ISSN: 0885-8993, DOI: 10.1109/TPEL.2014.2304561 [retrieved on 2014-08-13] * figures 16-19 * * Section VI * ----- | 1-10 | |

TECHNICAL FIELDS
SEARCHED    (IPC)

The present search report has been drawn up for all claims

| Place of search | Date of completion of the search | Examiner |
|---|---|---|
| The Hague | 21 September 2018 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

**REFERENCES CITED IN THE DESCRIPTION**

**Patent documents cited in the description**

- US 5986909 A1